# EUROPÄISCHE PATENTANMELDUNG

(11) **EP 0 668 645 A1**
(43) Veröffentlichungstag der Anmeldung: **23.08.1995**
(21) Anmeldenummer: 95101385.3
(22) Anmeldetag: 02.02.1995
(51) Int. Cl.: H02G 11/02

(54) **Tragbare elektrische Kabeltrommel**

(30) Priorität: 19.02.1994 DE 4405391
(71) Anmelder: Hugo Brennenstuhl GmbH & Co. KG, D-72074 Tübingen (DE)
(72) Erfinder: Brennenstuhl, Hugo, D-72074 Tübingen (DE)
(74) Vertreter: Reimold, Otto, Dipl.-Phys.Dr.

(57) **Zusammenfassung**

Eine tragbare elektrische Kabeltrommel (1) weist einen Trommelkörper (2) zum Aufwickeln eines elektrischen Verlängerungskabels (8) und eine an das Verlängerungskabel (8) angeschlossene Steckdoseneinheit (10) auf. Ferner ist an der Kabeltrommel (1) ein Radiogerät (21) fest angebracht, das mit Batterie betrieben oder in in die Kabeltrommel (1) integrierter Weise an das Verlängerungskabel (8) angeschlossen ist.

## Beschreibung

Die Erfindung betrifft eine tragbare elektrische Kabeltrommel mit einem Trommelkörper zum Aufwickeln eines elektrischen Verlängerungskabels und einer an das Verlängerungskabel angeschlossenen Steckdoseneinheit.

Beim Arbeiten beispielsweise auf Baustellen wird nebenher gerne Radio gehört. Häufig steht jedoch momentan kein Radiogerät zur Verfügung. Außerdem können solche Radiogeräte umfallen und beschädigt oder auch gestohlen werden.

Die vorliegende Erfindung will hier Abhilfe schaffen und sieht deshalb eine Kabeltrommel der eingangs genannten Art vor, an der ein Radiogerät fest angebracht ist, das mit Batterie betrieben oder in in die Kabeltrommel integrierter Weise an das Verlängerungskabel angeschlossen ist.

Auf diese Weise ist ein dauerhaft an einer Kabeltrommel angeordnetes Radiogerät vorhanden, das somit - da Kabeltrommeln auf Baustellen, in Werkstätten od.dgl. praktisch immer vorhanden sind - stets zur Verfügung steht. Außerdem entfallen weitgehend die bei der Verwendung eines gesonderten Radiogerätes vorhandenen Risiken einer Beschädigung oder eines Diebstahls.

Von den beiden genannten Alternativen ist der die Batterien einsparende trommelinterne elektrische Anschluß an das Verlängerungskabel besonders zweckmäßig. In diesem Falle ist das Radiogerät stets dann betriebsbereit, wenn das Verlängerungskabel mit dem ortsfesten Stromnetz verbunden ist.

Ein Ausführungsbeispiel der Erfindung sowie die in den Unteransprüchen angegebenen zweckmäßigen Ausgestaltungen werden nun anhand der Zeichnung erläutert. Es zeigen:
Fig. 1 eine erfindungsgemäße Kabeltrommel in Schrägansicht und
Fig. 2 die Kabeltrommel nach Fig. 1, wobei der Trommelkörper im schematischen Querschnitt und das Trag- und Standgestell in Seitenansicht dargestellt ist.

Die aus der Zeichnung hervorgehende Kabeltrommel 1 weist einen Trommelkörper 2 auf, der an einem Trag- und Standgestell 3 um eine Drehachse 4 drehbar gelagert ist. Beim Ausführungsbeispiel wird die Drehachse von einem abgebogenen Endstück 5 des aus einem Rohr gebogenen Trag-und Standgestells 3 gebildet, wobei das Endstück 5 von einer Seite her in axialer Richtung in den Trommelkörper 2 eingreift, so daß der Trommelkörper 2 um das Endstück 5 gedreht werden kann.

Das Trag- und Standgestell 3 bildet unterhalb vom Trommelkörper 2 eine Standfläche 6 und oberhalb vom Trommelkörper 2 einen Tragegriff 7, so daß die Kabeltrommel von Hand getragen und am Einsatzort auf den Boden oder eine sonstige Unterlage abgestellt werden kann. In Gebrauchslage verläuft die Drehachse 4 horizontal.

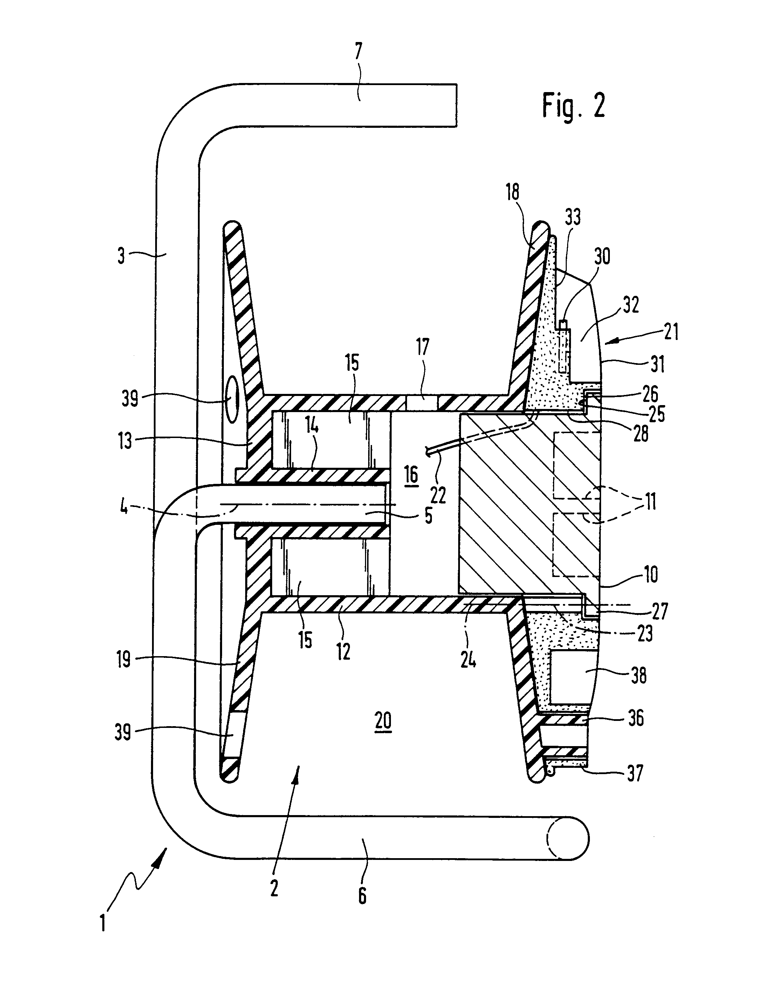

Auf den Trommelkörper 2 ist ein elektrisches Verlängerungskabel 8 aufgewickelt, das in Figur 2 der Einfachheit halber weggelassen worden ist. Das Verlängerungskabel 8 ist an seinem freien Ende mit einem elektrischen Stecker 9 versehen, der sich in eine ortsfeste Steckdose einstecken läßt.

Das entgegengesetzte Ende des Verlängerungskabels 8 ist an dem Trommelkörper 2 festgelegt und an eine am Trommelkörper sitzende Steckdoseneinheit 10 angeschlossen, die mindestens eine von außen her zugängliche Steckdose 11 aufweist, wobei die dargestellte Steckdoseneinheit 10 vier solche Steckdosen 11 besitzt. Auf die elektrischen Teile der Steckdoseneinheit 10 und deren Anschluß an das Verlängerungskabel 8 kommt es im vorliegenden Zusammenhang im einzelnen nicht weiter an, so daß die Steckdoseneinheit 10 in Fig. 2 nur symbolisch als kompakter Block angedeutet ist.

Durch Drehen des Trommelkörpers 2 kann das Verlängerungskabel 8 vom Trommelkörper abgewi kelt werden, so daß nach dem Einstecken des Steckers 9 in die ortsfeste Steckdose am Aufstellort der Kabeltrommel 1 an der Steckdoseneinheit 10 die Netzspannung zur Verfügung steht. Durch Verbinden mit der mindestens einen Steckdose 11 kann dann dort irgend ein elektrisches Gerät betrieben werden.

Der Trommelkörper 2 ist beim Ausführungsbeispiel ein Spritzgußteil und besteht aus Kunststoff. Er weist einen Trommelkern 12 auf, der beim Ausführungsbeispiel hohl ausgebildet und einseitig durch eine Stirnwand 13 abgeschlossen ist, an die zentral eine in das Innere des Trommelkerns 12 ragende Lagerhülse 14 angeformt ist, mit der der Trommelkörper 2 auf das Gestell-Endstück 3 aufgesteckt ist. Von der Lagerhülse 14 stehen der Stabilität wegen radiale Versteifungswände 15 ab, die zum Trommelkernmantel verlaufen. Die Lagerhülse 14 und die Versteifungswände 15 erstrecken sich nur bis in den mittleren Bereich des Trommelkerns 12, so daß dessen der Stirnwand 13 entgegengesetzter Innenraumbereich 16 insoweit frei bleibt und Platz zur Aufnahme der Steckdoseneinheit 10 und des Anschlusses des Verlängerungskabels 8 an die Steckdoseneinheit 10 bietet. Das betreffende Ende des Verlängerungskabels 8 ist durch ein Loch 17 des Trommelkernmantels in das Trommelkerninnere gesteckt und dort mit der Steckdoseneinheit 10 verbunden.

Der Trommelkern 12 weist ferner an den beiden Enden des zylindrischen Trommelkerns 12 jeweils eine flanschähnlich vom Trommelkern 12 abstehende Seitenwand 18 bzw. 19 auf, so daß am Trommelkörper 2 ein radial innen vom Trommelkern 12 und seitlich von den beiden Seitenwänden 18,19 begrenzter Wickelraum 20 gebildet wird, der zur Aufnahme des vom aufgewickelten Kabel 8 gebildeten Wickels dient.

An dieser Kabeltrommel 1 ist ein Radiogerät 21 fest angebracht, das in in die Kabeltrommel integrierter Weise an das Verlängerungskabel 8 angeschlossen ist, so daß es über dieses mit Strom versorgt wird. Das Radiogerät 21 ist in Fig. 2 in seiner Schnittebene gepunktet dargestellt, da es im vorliegenden Zusammenhang auf den inneren Aufbau des Radiogerätes nicht weiter ankommt, so daß diese symbolische Darstellungsweise genügt.

Das Radiogerät 21 bildet somit einen Bestandteil der Kabeltrommel 1. Dabei ist des weiteren vorgesehen, daß das Radiogerät 21 am Trommelkörper 2 angeordnet ist. Das Radiogerät 21 befindet sich also am gleichen Kabeltrommelteil wie das Verlängerungskabel 8, so daß die Stromversorgung des Radiogerätes sehr einfach dadurch verwirklicht werden kann, daß das in Fig. 2 angedeutete Anschlußkabel 22 des Radiogerätes 21 in den Trommelkern-Innenraum 16 geführt und dort mit dem Verlängerungskabelende (in Fig. 2 nicht dargestellt) leitend verbunden ist. Diese Anschlußkabelführung kann beim Ausführungsbeispiel durch die in Wirklichkeit Hohlräume aufweisende Steckdoseneinheit 10 hindurch erfolgen. Das Radiogerät könnte auch innerhalb der Steckdoseneinheit 10 elektrisch angeschlossen sein.

Ferner ist beim Ausführungsbeispiel vorgesehen, daß das Radiogerät 21 an der dem Wickelraum 20 abgewandten Außenseite einer der Trommelkörper-Seitenwände angeordnet ist. Handelt es sich wie im dargestellten Falle um eine Kabeltrommel mit einem Trag- und Standgestell 3, das die Außenseite von nur einer der Trommelkörper-Seitenwände, nämlich die der Seitenwand 19 übergreift, befindet sich das Radiogerät 21 zweckmäßigerweise an der vom Trag- und Standgestell 3 freien Trommelkörper-Seitenwand 18. Das Radiogerät ist dann zu seiner Bedienung frei zugänglich.

Beim Ausführungsbeispiel befindet sich die Steckdoseneinheit 10 im zentralen Bereich der Trommelkörper-Seitenwand 18. Dabei ist sie zweckmäßigerweise koaxial zum Trommelkern 12 angeordnet. Das Radiogerät 21 befindet sich nun an der Trommelkörperseite der Steckdoseneinheit und dabei radial außerhalb der Steckdoseneinheit 10 an der diese enthaltenden Trommelkörper-Seitenwand 18. Das Radiogerät 21 weist Ringgestalt auf und umschließt die Steckdoseneinheit 10. Prinzipiell könnte es sich auch um eine die Steckdoseneinheit nur teilweise umschließende Teilringgestalt handeln.

Zweckmäßigerweise ist das Radiogerät 21 ein von der Trommelkörper-Seitenwand 18 gesondertes Bauteil und auf die Seitenwand aufgesetzt. Dabei kann die Anordndung so getroffen sein, daß man einen herkömmlichen Trommelkörper 2 nimmt und an diesem das Radiogerät 21 anbringt, so daß der Trommelkörper 2 und außerdem auch die Steckdoseneinheit 10 unverändert beibehalten werden können.

Beim Ausführungsbeispiel ist die Steckdoseneinheit 10 mit Hilfe von strichpunktiert angedeuteten Befestigungsschrauben 23, die über den Umfang verteilt sind, mit dem Trommelkörper 2 verbunden, der hierzu den Befestigungsschrauben 23 zugeordnete Gewindebohrungen 24 aufweist. Dabei bildet die Steckdoseneinheit 10 eine nach radial außen vorstehende Spannfläche 25, die eine radial innen am Radiogerät 21 angeordnete Gegenfläche 26 übergreift und bei festgezogenen Befestigungsschrauben 23 das Radiogerät 21 gegen den Trommelkörper 2 hält. Die Spannfläche 25 und die Gegenfläche 26 laufen ringförmig um, wobei die Spannfläche 25 beim Ausführungsbeispiel von einem an der Vorderseite der Steckdoseneinheit umlaufenden Ringbund 27 gebildet wird, durch den hindurch sich auch die Befestigungsschrauben 23 erstrecken. Der Innenumfang des Radiogerätes 21 ist entsprechend gestuft ausgebildet. Das Radiogerät 21 besitzt somit eine zentrale Ausnehmung 28, die von der Steckdoseneinheit 10 durchgriffen wird. Dabei läßt das Radiogerät die Stellen, an denen die Befestigungsschrauben 23 verlaufen, frei, wobei das Radiogerät hier auch Durchtrittsbohrungen aufweisen könnte.

Bei der Montage wird so vorgegangen, daß man zunächst das Radiogerät 21 auf die Trommelkörper-Seitenwand 18 legt und anschließend die Steckdoseneinheit durch das Radiogerät steckt, wonach man die Befestigungsschrauben 23 einführt und festzieht.

Läßt man das Radiogerät 21 weg, kann die Steckdoseneinheit 10 bis zur Anlage der Spannfläche 25 am Trommelkörper 2 in den Trommelkern 12 eingeschoben (der Trommelkern 12 ist an dieser Stirnseite offen) und mittels der gleichen Gewindebohrungen 24 des Trommelkörpers mit diesem verschraubt werden. Je nach der Länge der Gewindebohrungen 24 sind lediglich unterschiedlich lange Befestigungsschrauben 23 erforderlich. Auf diese Weise erhält man ohne sonstige Veränderungen eine übliche, radiolose Kabeltrommel.

Das Radiogerät 21 weist bevorzugt eine scheiben- oder tellerähnliche Flachgestalt auf, wie aus der Zeichnung hervorgeht. Es ergibt sich hierdurch sozusagen das Aussehen einer verdickten Seitenwand 18. Ferner kann der Aussendurchmesser des Radiogerätes 21 im wesentlichen dem Außendurchmesser der Trommelkörper-Seitenwand 18 entsprechen.

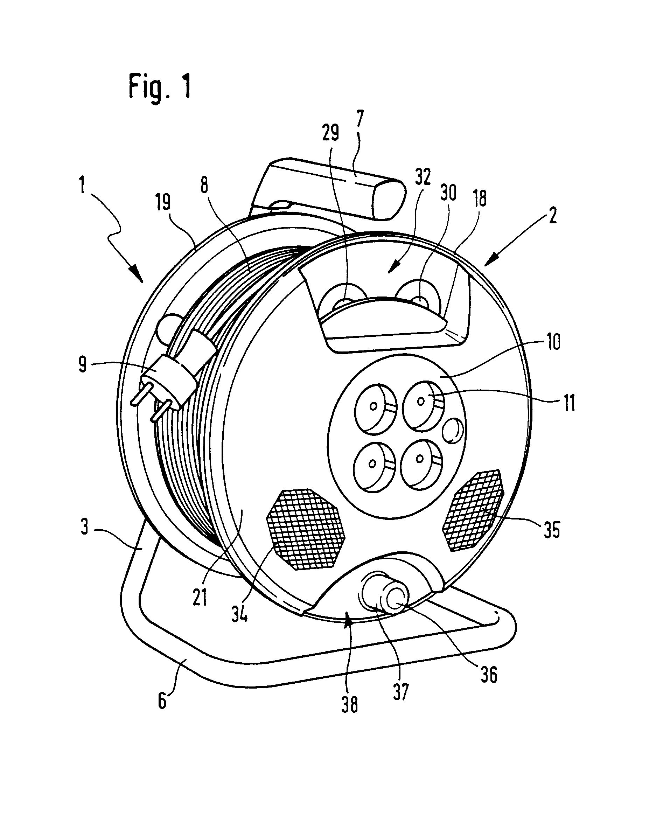

Die beispielsweise für die Sendereinstellung und die Lautstärkeregulierung vorhandenen Bedienelemente 29,30 des Radiogerätes 21 sind mit Bezug auf die in Fig. 1 dem Betrachter zugewandte Radiogerät-Vorderseite 31 vertieft angeordnet, so daß sie geschützt untergebracht sind. Beim Ausführungsbeispiel handelt es sich um eine im oberen Bereich des Radiogerätes angeordnete Gehäusevertiefung 32, an deren dem Trommelkörper 2 zugewandten Bodenwand 33 die Bedienelemente 29,30 in Gestalt von Drehknöpfen angeordnet sind. Die oberseitige Anordndung der Vertiefung 32 mit den Bedienelementen 29,30 erleichtert deren Zugänglichkeit.

Die Radiogeräte-Vorderseite 31 enthält außerdem noch siebartige Lautsprecheröffnungen 34,35.

Aus der Zeichnung geht ferner hervor, daß an der Außenseite der Trommelkörper-Seitenwand 18 ein zapfenartiger Handgriff 36 absteht, den man zum Verdrehen des Trommelkörpers 2 ergreifen kann. Diese Funktion bleibt bei aufgesetztem Radiogerät 21 erhalten. Hierzu weist das Gehäuse des Radiogerätes eine handgriffartig abstehende Anformung 37 hülsenartiger Gestalt auf, die auf den Handgriff 36 aufgesteckt ist, so daß dieser von der Anformung 37 umgeben ist und anstelle des Handgriffs 36 die Anformung 37 ergriffen wird. Die Anformung 37 könnte an ihrer Vorderseite auch geschlossen sein, so daß der Handgriff 36 nach außen hin abgedeckt wäre. Ferner könnte die Anformung 37 auch kürzer sein oder ganz fehlen, so daß der Handgriff 36 durch das Radiogerät bzw. dessen Gehäuse hindurch nach außen hin vorstehen würde. Durch die aufgesteckte Anformung 37 erhält man jedoch eine weitere Stabilisierung des Halts des Radiogeräts am Trommelkörper.

Im Bereich des Handgriffs 36 bzw. der Anformung 37 befindet sich an der Vorderseite des Radiogerätes eine weitere Vertiefung 38, so daß das Ergreifen des Handgriffs bzw. der Anformung 37 nicht durch das Gerätegehäuse gestört ist.

Beim Ausführungsbeispiel sind an der Seitenwand 18 des Trommelkörpers 2 noch zwei weitere dem Handgriff 36 entsprechende Handgriffe angeordnet, die über den Umfang verteilt und daher in Fig. 2 nicht sichtbar sind. Diese weiteren Handgriffe treten bei aufgesetztem Radiogerät jedoch nicht in Erscheinung. Das Radiogerät 21 besitzt an den Stellen dieser weiteren Handgriffe jeweils eine entsprechende Ausnehmung, die im Inneren des Radios endet bzw. durch die Vorderseite des Radiogerätes abgedeckt ist. Das Radiogerät wird also auf alle drei Handgriffe aufgesteckt, so daß diese eine Zentrierung bei der Montage bilden. Selbstverständlich könnte auch eine andere Anzahl als drei Handgriffe vorhanden sein.

Die entgegengesetzte Seitenwand 19 des Trommelkörpers 2 weist an den Stellen der Handgriffe 36 jeweils ein Loch 39 auf. Hierdurch wird das gestapelte Lagern der Trommelkörper vor der Montage der Kabeltrommel erleichtert, indem man aufeinander gelegte Trommelkörper mit ihren Handgriffen 36 und Löchern 39 zusammensteckt.

Das Radiogerät 21 weist zweckmäßigerweise keine ausziehbare sondern eine in das Gehäuse integrierte Antenne auf.

Oben wurde erläutert, daß das Radiogerät in in die Kabeltrommel integrierter Weise an das Verlängerungskabel angeschlossen ist. Anstelle hiervon könnte man das Radiogerät jedoch auch mit Batterien betreiben. Der Anschluß an das Verlängerungskabel würde dann entfallen.

## Patentansprüche

1. Tragbare elektrische Kabeltrommel mit einem Trommelkörper zum Aufwickeln eines elektrischen Verlängerungskabels und einer an das Verlängerungskabel angeschlossenen Steckdoseneinheit, dadurch gekennzeichnet, daß an der Kabeltrommel (1) ein Radiogerät (21) fest angebracht ist, das mit Batterie betrieben oder in in die Kabeltrommel (1) integrierter Weise an das Verlängerungskabel (8) angeschlossen ist.

2. Kabeltrommel nach Anspruch 1, dadurch gekennzeichnet, daß das Radiogerät (21) am Trommelkörper (2) angeordnet ist.

3. Kabeltrommel nach Anspruch 2, bei der der Trommelkörper einen Trommelkern und an den beiden Trommelkernenden jeweils eine flanschähnlich vom Trommelkern abstehende Seitenwand zur seitlichen Begrenzung eines den Kabelwickel aufnehmenden Wickelraums aufweist, dadurch gekennzeichnet, daß das Radiogerät (21) an der dem Wickelraum (20) abgewandten Außenseite einer der Trommelkörper-Seitenwände (18) angeordnet ist.

4. Kabeltrommel nach Anspruch 3, bei der der Trommelkörper an einem Trag- und Standgetell gelagert ist, das die Außenseite von nur einer der Trommelkörper-Seitenwände übergreift, dadurch gekennzeichnet, daß das Radiogerät (21) an der vom Trag- und Standgestell (3) freien Trommelkörper-Seitenwand (18) angeordnet ist.

5. Kabeltrommel nach Anspruch 3 oder 4, bei der die Steckdoseneinheit (10) im zentralen Bereich einer der Trommelkörper-Seitenwände (18) angeordnet ist, dadurch gekennzeichnet, daß das Radiogerät (21) radial außerhalb der Steckdoseneinheit (10) an der diese enthaltenden Trommelkörper-Seitenwand (18) angeordnet ist.

6. Kabeltrommel nach Anspruch 5, dadurch gekennzeichnet, daß das Radiogerät (21) eine die Steckdoseneinheit (10) teilweise oder ganz umschließende Teilringgestalt bzw. Ringgestalt aufweist.

7. Kabeltrommel nach einem der Ansprüche 3 bis 6, dadurch gekennzeichnet, daß das Radiogerät (21) ein von der Trommelkörper-Seitenwand (18) gesondertes Bauteil ist und auf die Seitenwand (18) aufgesetzt ist.

8. Kabeltrommel nach Anspruch 7, dadurch gekennzeichnet, daß die Steckdoseneinheit (10) mit Hilfe von Befestigungsschrauben (23) mit dem zugehörige Gewindebohrungen (24) aufweisenden Trommelkörper verbunden ist und eine nach radial außen vorstehende Spannfläche (25) bildet, die eine radial innen am Radiogerät (21) angeordnete Gegenfläche (26) übergreift und das Radiogerät (21) gegen den Trommelkörper (2) hält.

9. Kabeltrommel nach Anspruch 8, dadurch gekennzeichnet, daß bei entferntem Radiogerät (21) die Steckdoseneinheit (10) bis zur Anlage der Spannfläche (25) der Steckdoseneinheit (10) am Trommelkörper (2) in den Trommelkern (12) steckbar und mittels der gleichen Gewindebohrungen (24) mit dem Trommelkörper (2) verschraubbar ist.

10. Kabeltrommel nach einem der Ansprüche 7 bis 9 mit einer Trommelkörper-Seitenwand, an deren Außenseite mindestens ein zapfenartiger Handgriff absteht, dadurch gekennzeichnet, daß der Handgriff (36) oder mindestens einer der Handgriffe durch das auf die Seitenwand (18) aufgesetzte Radiogerät (21) hindurch nach außen hin vorsteht oder in eine handgriffartig abstehende Anformung (37) des Radiogerätes (21) eingreift.

11. Kabeltrommel nach einem der Ansprüche 6 bis 10, dadurch gekennzeichnet, daß das Radiogerät (21) eine scheiben- oder tellerähnliche Flachgestalt aufweist.

12. Kabeltrommel nach einem der Ansprüche 7 bis 11, dadurch gekennzeichnet, daß der Außendurchmesser des Radiogerätes (21) im wesentlichen dem der Trommelkörper-Seitenwand (18) entspricht.

13. Kabeltrommel nach einem der Ansprüche 1 bis 12, dadurch gekennzeichnet, daß die Bedienelemente (29,30) des Radiogerätes (21) mit Bezug auf die Radiogerät-Vorderseite vertieft angeordnet sind.
